# EUROPÄISCHE PATENTSCHRIFT

(11) **EP 3 114 551 B1**
(45) Veröffentlichungstag und Bekanntmachung des Hinweises auf die Patenterteilung: **25.07.2018**
(21) Anmeldenummer: 14709551.7
(22) Anmeldetag: 06.03.2014
(51) Int. Cl.: G06F 3/0485, G06F 3/0488

(54) **VERFAHREN ZUM STEUERN EINER ANZEIGEEINRICHTUNG AN DEN RAND EINES DARZUSTELLENDEN INFORMATIONSELEMENTS**
METHOD FOR CONTROLLING A DISPLAY DEVICE AT THE EDGE OF AN INFORMATION ELEMENT TO BE DISPLAYED
PROCÉDÉ POUR COMMANDER UN DISPOSITIF D'AFFICHAGE AU NIVEAU DU BORD D'UN ÉLÉMENT D'INFORMATION QU'IL S'AGIT DE PRÉSENTER

(43) Veröffentlichungstag der Anmeldung: 11.01.2017
(73) Patentinhaber: Unify GmbH & Co. KG, 80807 München (DE)
(72) Erfinder: LEDERER, Thomas, 82211 Herrsching (DE)
(74) Vertreter: Fritzsche, Thomas
(86) Internationale Anmeldenummer: PCT/EP2014/000583
(87) Internationale Veröffentlichungsnummer: WO 2015/131917

(56) Entgegenhaltungen:
- US-A1- 2009 278 806
- US-A1- 2011 093 812

## Beschreibung

Die vorliegende Erfindung betrifft ein Verfahren gemäß dem Oberbegriff des Anspruchs 1. Ferner betrifft die vorliegende Erfindung ein dieses Verfahren ausführendes Computerprogrammprodukt für eine entsprechende Steuereinrichtung eines informationstechnischen Geräts, einen Datenträger mit dem darauf gespeicherten Computerprogrammprodukt und ein informationstechnisches Gerät mit einer Steuereinrichtung, die für die Ausführung des vorgenannten Verfahrens ausgestaltet ist, gemäß dem Anspruch 7, 8 bzw. 9. Schließlich betrifft die vorliegende Erfindung die Verwendung einer Steuereinrichtung zum Steuern der Anzeigeeinrichtung eines informationstechnischen Geräts gemäß dem Anspruch 12. Informationstechnische Geräte im Sinne der vorliegenden Erfindung sind beispielsweise Desktop-Computer, Laptops bzw. Notebooks sowie Mobiltelefone, insbesondere sogenannte Smartphones, Tablet-Computer und Lesegeräte für die Anzeige von Dokumenten, MP3-Player, Fernbedienungen mit Display, tragbare Video- bzw. DVD-Player etc. Derartige informationstechnische Geräte, die nachfolgend auch abkürzend als IT-Geräte bezeichnet werden, verfügen immer häufiger über einen sogenannten Touchscreen, also eine Anzeigeeinrichtung für Informationselemente, wie insbesondere Listen/Texte/Webseiten, welche berührungsempfindlich ist und somit zum Steuern der Anzeigeeinrichtung durch einen Benutzer verwendet werden kann. Hierbei werden zunehmend sogenannte Wischbewegungen oder Wischgesten verwendet, die als Steuerbewegung dienen. Derartige Wischgesten sind beispielsweise das vertikale "Scrollen" von Listen oder das horizontale Blättern zwischen verschiedenen Ansichten, z. B. einer Bildergalerie. Bei den Wischgesten handelt es sich häufig um Bewegungen der Hand oder eines Fingers eines Benutzers derartiger Geräte. Da solche Geräte nur Anzeigeeinrichtungen mit begrenzter Größe aufweisen, ist zur Erzielung eines gewissen Mindestmaßes an Präzision pro ausgeführter Wischgeste nur ein bestimmtes Maß an Scrollen oder Blättern möglich. Da somit nur begrenzt weitergeblättert werden kann, sind bei längeren Listen/Texten/Webseiten mehrere - oder sogar als unzumutbar viel empfundene - Bewegungen nötig. Dieses Problem tritt insbesondere dann auf, wenn bei längeren Texten oder Listen schon weit nach unten gescrollt wurde und dann wieder zum Anfang zurückgekehrt werden soll (oder umgekehrt).

Ferner ist bekannt, das Scrollen in längeren Listen dadurch zu beschleunigen, dass die Schnelligkeit der Wischgesten berücksichtigt wird. Hierunter leidet jedoch die Genauigkeit des Scrollvorgangs, da dessen Stoppen nicht direkt beeinflusst werden kann. Außerdem sind in der Regel mehrere Aktionen bzw. Gesten erforderlich.

Außerdem ist es bekannt, alternativ zum Scrollen eine eigene Scrollleiste bzw. einen eigenen Scrollbalken vorzusehen. Der Nachteil hierbei ist jedoch, dass von der naturgemäß begrenzten Fläche auf der Anzeigeeinrichtung Platz für den eigentlichen Zweck, nämlich die Darstellung von Information, verloren geht. Auch durch das Vorsehen eines eigenen Steuerfelds in der graphischen Bedienoberfläche für das Springen an den Anfang oder das Ende wird wertvolle Nutzfläche für die Darstellung von Information "verbraucht".

Die EP 2 472 380 A2 lehrt, das Scrollen von langen Objekten durch eine kreisförmige Wischgeste zu vereinfachen. Die Scrollgeschwindigkeit kann z. B. durch die Geschwindigkeit der Wischgeste oder durch den Radius der Drehbewegung bestimmt werden, während die Scrollrichtung durch eine vorangegangene lineare Wischgeste bestimmt wird. Dabei genügt nach einer anfänglichen linearen Wischgeste, welche die Richtung vorgibt, die Vervollständigung dieser Geste zu einer kompletten Drehung um 360°, um zum Anfang bzw. Ende des Objekts zu gelangen. Viele Benutzer empfinden eine derartige komplexe Wischbewegung als wenig intuitiv, um zum Ende oder Anfang eines Dokuments zu gelangen.

Aus "http://www.dsource.in/course/touch-screen-gestures/gestures-of-touchscreen/index.html" ist eine ähnliche technische Lehre bekannt, bei der jedoch die Scrollrichtung durch den Drehsinn der Wischgeste vorgegeben ist. Diese Anwendung ist nicht nur auf Touchscreens bezogen, sondern ist auch bei sogenannten "Circular Track Pads" (also Dreheinstellrädern) einsetzbar.

Bei der aus der US 2009/0278806 A1 bekannten Touchsteuerung ist zusätzlich zum Display eine berührungsempfindliche (oder zumindest Benutzergesten erkennende) "Gesture Area" auf der Oberfläche des Geräts vorhanden, die zur Eingabe von Befehlen (mit)benutzt werden kann. Diese Gesture Area (berührungsempfindliche Fläche) ist dabei größer als das Display. Die außerhalb des Displays liegenden Flächen können für die Eingabe von Gesten genutzt werden, die von den aktuell dargestellten Elementen unabhängig sind. Die Gesture Area kann unter anderem dazu verwendet werden, einen über das Display aktivierten Befehl, wie z. B. "Scrollen" zu modifizieren (z. B. zu "sprunghaftes Scrollen").

Bei dem gestengesteuerten Scrollverfahren gemäß der WO 2010/060584 A1 werden mehrere Möglichkeiten beschrieben, die Scrollgeschwindigkeit nach einer anfänglichen Wischgeste intern zu steuern. So kann beispielsweise ein schnelles filmartiges Durchblättern in Gang gesetzt werden, das gegebenenfalls so lange ohne Unterbrechung weiterläuft, bis der Anfang oder das Ende einer Liste erreicht ist. US 2011/0093812 A1 zeigt ein Scrollverfahren, wobei die Scroll-Funktion von einer Geste eines Fingers abhängig ist.

Aus " http://www.microsoft.com/surface/de-de/support/touch-mouse-and-search/usingtouch-gestures-tap-swipe-and-beyond" ist bekannt, durch Streifen vom Bildschirmrand nach innen verschiedene Menüoptionen einzublenden oder zu aktivieren.

Keine der vorstehend genannten Möglichkeiten, den Anfang oder das Ende einer Liste bzw. eines Dokuments zu erreichen, erscheint für die tägliche Benutzung einfach genug und intuitiv zugänglich.

Der vorliegenden Erfindung liegt daher die Aufgabe zugrunde, eine intuitive Steuerbewegung, insbesondere Wischgeste, anzugeben, mit der ohne Verwendung von Mehrfachbewegungen und ohne die Notwendigkeit eines eigenen Steuerfelds an den Beginn oder das Ende eines Informationselements - wie insbesondere ListerText/Webseite - gescrollt werden kann.

Diese Aufgabe wird durch ein Verfahren gemäß Anspruch 1, ein Computerprogrammprodukt gemäß Anspruch 7, einen Datenträger gemäß Anspruch 8, ein informationstechnisches Gerät gemäß Anspruch 9 sowie eine Verwendung einer Steuereinrichtung für ein solches informationstechnisches Gerät gemäß Anspruch 12 gelöst. Vorteilhafte Weiterbildungen der Erfindung sind Gegenstand der abhängigen Ansprüche.

Unter dem Begriff "Anzeigeeinrichtung" soll in allgemeinster Form eine Anzeigeeinrichtung zur Anzeige von bildhaften Informationen verstanden werden. Derartige Anzeigeeinrichtungen werden auch als Bildschirme oder Displays bezeichnet und können unter Einsatz verschiedenster Technologien wie beispielsweise durch Einsatz von LCDs, LEDs oder OLEDs hergestellt werden. Solche Anzeigeeinrichtungen sind insbesondere berührungsempfindlich und somit als sogenannte Touchscreens ausgestaltet, so dass ein Benutzer derartige Anzeigeeinrichtungen gleichzeitig auch als Eingabeeinrichtung benutzen kann, indem er mit einem Stift, einem Finger oder auch mehreren Fingern die Anzeigeeinrichtung an wenigstens einer Position berührt oder fester darauf drückt oder mit dem Finger bzw. Stift über die Anzeigeeinrichtung streicht, was auch als Wischgeste bezeichnet wird.

Mit einem erfindungsgemäßen Verfahren kann eine Anzeigeeinrichtung derart gesteuert werden, dass von einem auf der Anzeigeeinrichtung dargestellten Abschnitt eines Informationselements - von dem ein bestimmter, erster Rand nicht dargestellt ist - ein erster Randabschnitt zur Anzeige gebracht wird, der diesen ersten Rand des Informationselements einerseits sowie den dem ersten Rand benachbarten Bereich des Informationselements andererseits umfasst. Das heißt in anderen Worten, dass in einem beliebigen Informationselement ein gewünschter Rand auf der Anzeigeeinrichtung dargestellt werden kann. Als Informationselement sind beispielsweise Texte, Dokumente, Listen von Gegenständen, Galerien von beispielsweise Bildern oder ähnliches denkbar. Die Anzeigeeinrichtung ist dabei beispielsweise ein Display eines Geräts, insbesondere eines informationstechnischen Geräts. Das erfindungsgemäße Verfahren umfasst den Schritt des Ausführens einer mehr oder minder linearen Bewegung ("Translation") des dargestellten Abschnitts des Informationselements in eine erste Richtung (beispielsweise nach oben) in Abhängigkeit von einer von einem Benutzer ausgeführten Steuerbewegung in eine zweite Richtung (in diesem Beispiel nach unten), wobei die Translation ein Steuersignal auslöst, das an eine Steuereinrichtung, wie beispielsweise eine CPU geleitet wird. Das erfindungsgemäße Verfahren zeichnet sich dadurch aus, dass ein zweites Steuersignal erzeugt und an die Steuereinrichtung gesendet wird, sobald die Steuerbewegung den durch Bewegung in der zweiten Richtung erreichten zweiten Rand der Anzeigeeinrichtung erreicht hat. Schließlich stellt die Steuereinrichtung, nachdem sie das erste und das zweite Steuersignal empfangen hat, sprunghaft - d. h. also diskontinuierlich und nicht wie ein "normaler" oder "beschleunigter" Scrollvorgang - den durch die Bewegung in der ersten Richtung erreichten ersten Randabschnitt des Informationselements auf der Anzeigeeinrichtung dar.

Das erste Steuersignal ist typischerweise als vektorartige Größe ausgestaltet, aus dem sich zumindest die Richtung der ausgelösten Translation, gegebenenfalls auch ein zumindest vorläufiger Wert für die Länge der Translation ergibt.

Die zuvor angesprochene Steuerbewegung kann beispielsweise das Wischen mit einem Daumen bzw. Finger oder einem Zeigegerät über eine Touchoberfläche sein, sie kann aber auch das "Ziehen" mit einer Maus über einen herkömmlichen Bildschirm sein.

Durch das erfindungsgemäße Verfahren - das auch als "computerimplementiertes Verfahren" bezeichnet werden kann, das mittels einer CPU oder einer anderen Steuereinheit ausgeführt werden kann - kann ein Benutzer eine Anzeigeeinrichtung aus jedem beliebigen Abschnitt eines auf der Anzeigeeinrichtung dargestellten Informationselements durch eine einfache, intuitive und schnelle Steuerbewegung an ein beliebiges Ende dieses Informationselements gelangen, also beispielsweise an das linke, rechte, obere oder untere Ende dieses Informationselements springen.

Gemäß einer bevorzugten Ausführungsform des erfindungsgemäßen Verfahrens ist der Rand der Anzeigeeinrichtung ein Streifen mit einer vorbestimmten Breite. Das heißt in anderen Worten, dass die Steuereinrichtung die Steuerbewegung nicht exakt bis zum Rand der Anzeigeeinrichtung (beispielsweise Touchscreen) erfassen muss, um entscheiden zu können, ob die Steuerbewegung tatsächlich bis zum Rand der Anzeigeeinrichtung erfolgt ist und somit ein "Sprungbefehl" an das betreffende Ende des gerade angezeigten Informationselements auszuführen ist. Es kann auch davon gesprochen werden, dass ein Streifen mit der vorbestimmten Breite von der Steuereinrichtung als Rand bzw. Randbereich angesehen wird und somit der "Sprungbefehl" nicht nur in einem etwas früheren Stadium der Steuerbewegung aktiviert wird, sondern dass damit auch die Sicherheit der Erkennung des Vorliegens eines solchen Sprungbefehls verbessert wird. Es ist hierbei denkbar, dass der Benutzer die vorbestimmte Breite innerhalb eines bestimmten Bereichs verändern kann, um die Funktionsweise des von ihm bedienten Geräts an seine Bedürfnisse anzupassen. So kann es beispielsweise für Benutzer, die einen Touchscreen in der Regel relativ großflächig mit dem Daumen bedienen, angenehmer und effizienter sein, eine relativ große vorbestimmte Breite zu wählen, während Benutzer, die ihr Gerät in der Regel mit der Spitze eines gegebenenfalls zierlichen Fingers bedienen, möglicherweise mit einer relativ kleinen vorbestimmten Breite besser zurechtkommen.

Gemäß einer vorteilhaften Variante des erfindungsgemäßen Verfahrens verläuft die Translation des dargestellten Abschnitts des Informationselements nach Beginn der die Translation auslösenden Steuerbewegung proportional zu dieser Steuerbewegung, und zwar so lange, bis die Steuerbewegung den betreffenden bzw. zweiten Rand der Anzeigeeinrichtung erreicht. Hierdurch hat der Benutzer den Vorteil, dass die ihm vertraute Funktionsweise seiner Anzeigeeinrichtung für den "Anfang" der Steuerbewegung in gewohnter Weise ausgeführt wird, und dass der Sprung an das angestrebte Ende des Informationselements, wie es auf der Anzeigeeinrichtung gerade dargestellt wird, erst bei Erreichen des Rands erfolgt, obwohl eine Steuerbewegung möglicherweise extrem schnell ausgeführt wird, um genau diesen Sprungeffekt möglichst schnell zu erzielen. Diese Vorgehensweise bietet sich insbesondere bei der Benutzung eines Touchscreens an. Bei der Steuerung einer Anzeige mittels eines Zeigegeräts, wie beispielsweise einer Computermaus, bei der beispielsweise ein Text angeklickt und nach unten oder oben gezogen werden soll, ist diese proportionale Translation nicht unbedingt vorteilhaft, weil sie beispielsweise bei Word-Dokumenten in dieser Weise gar nicht durchführbar ist, wobei jedoch auch hier bei Erreichen des betreffenden Rands ein Sprung an das gewünschte Ende des Dokuments hervorgerufen werden kann.

Es ist von Vorteil, wenn die Steuereinrichtung den ersten Randabschnitt - also nach Sprung an den betreffenden Rand - so darstellt, dass der erste Rand des Informationselements dem ersten Rand der Anzeigeeinrichtung benachbart ist. Das heißt in anderen Worten, dass der auf der Anzeigeeinrichtung für die Darstellung des Informationselements zur Verfügung stehende Platz optimal ausgenützt wird, indem nicht nur der Rand des Informationselements, sondern auch möglichst viel von seiner Umgebung dargestellt wird. Selbstverständlich ist es auch möglich, das erfindungsgemäße Verfahren so zu steuern, dass der angesteuerte erste Rand des Informationselements an anderer Stelle auf der Anzeigeeinrichtung, beispielsweise in deren Mitte, angezeigt wird, um auf dem von dem Informationselement nicht beanspruchten Platz der Anzeigeeinrichtung andere Informationen darstellen zu können.

Es entspricht der typischen Benutzungsweise eines Touchscreens, wenn die erste Richtung - in der die Translation der Darstellung des Informationselements ausgeführt wird - zur zweiten Richtung - in der die Steuerbewegung erfolgt - zumindest im Wesentlichen antiparallel ist. Da bei einem Navigieren in einer Liste, beispielsweise nach unten, von einer schräg ausgeführten Steuerbewegung nur die jeweilige vertikale Bewegungskomponente für die Translation herangezogen wird, ist es klar, dass die erste Richtung nicht exakt antiparallel zur zweiten Richtung sein muss, sondern dass diese Relation nur ungefähr erfüllt sein muss. In anderen Worten müssen also die jeweiligen Bewegungskomponenten, die für die Steuerbewegung bzw. die resultierende Translation richtungsbestimmend sind, entgegengesetzt sein. Dies gilt selbstverständlich auch für Bewegungen in einer horizontalen Richtung, beispielsweise zum Blättern in einer Bildergalerie.

Eine vorteilhafte Möglichkeit, ein ungewolltes Ausführen eines Sprungbefehles zu verhindern, besteht darin, die Geschwindigkeit der Steuerbewegung in unmittelbarer Nähe vor dem Rand - sei er nun als Streifen mit einer vorbestimmten Breite ausgebildet bzw. definiert oder nicht - der Anzeigeeinrichtung zu messen und den Rand der Anzeigeeinrichtung nur dann als erreicht anzusehen, wenn die Geschwindigkeit einen vorbestimmten Wert überschreitet. In anderen Worten wird somit der Rand nur dann als erreicht angesehen, wenn die Steuerbewegung mit einer bestimmten Geschwindigkeit am Rand ankommt. Falls ein Benutzer die ihm zur Verfügung stehende Fläche zum Scrollen bzw. Blättern in einer Liste maximal ausnutzen möchte, könnte er in Gefahr geraten, ungewollt an einen Rand des dargestellten Informationselements zu springen, falls er mit seiner lediglich zum Scrollen gedachten Steuerbewegung dem Rand zu nahe kommt. Ist dagegen zum Ausführen des Sprungbefehls auch eine bestimmte Mindestgeschwindigkeit in unmittelbarer Nähe des Rands - beispielsweise eine halbe Finger- oder Daumenbreite davon entfernt - erforderlich, wird demzufolge ein ungewolltes Springen an den Rand des Informationselements verhindert, wenn der Rand der Anzeigeeinrichtung zwar (fast) erreicht wird, dies jedoch so langsam geschieht, dass die Steuereinrichtung erkennt, dass gar kein Sprung beabsichtigt ist. Ein für die Zwecke dieser Erfindung tauglicher Geschwindigkeitsgrenzwert ist beispielsweise 1 m/s.

Ein besonders interessanter Anwendungsfall der vorliegenden Erfindung ist bei einem IT-Gerät mit einem berührungsempfindlichen Bildschirm - auch Touchscreen genannt - gegeben. Auf einem solchen Touchscreen werden die Steuerbewegungen als Wischbewegungen bzw. Wischgesten beispielsweise mittels eines Fingers und/oder eines Daumens oder aber mittels eines Zeigegeräts ausgeführt.

Die der Erfindung zugrunde liegende Aufgabe wird auch durch ein Computerprogrammprodukt bzw. ein Computerprogramm gelöst, welches eine Steuereinrichtung eines informationstechnischen Geräts steuert, um ein Verfahren gemäß der vorliegenden Erfindung ausführen zu können. Ferner wird die der Erfindung zugrunde liegende Aufgabe auch mit einem Datenträger gelöst, auf dem ein vorgenanntes Computerprogrammprodukt gespeichert ist und mit dessen Hilfe dieses Computerprogramm ausgeführt werden kann.

Ferner wird die der Erfindung zugrunde liegende Aufgabe mit einem informationstechnischen Gerät gelöst, das eine Anzeigeeinrichtung und eine Steuereinrichtung aufweist, die zum Steuern der Anzeigeeinrichtung vorgesehen und so ausgestattet ist, dass sie die Anzeigeeinrichtung nach Maßgabe eines erfindungsgemäßen Verfahrens steuern kann. Eine besonders vorteilhafte Ausgestaltung eines solchen informationstechnischen Geräts zeichnet sich dadurch aus, dass die Anzeigeeinrichtung einen Touchscreen aufweist.

Als zur vorliegenden Erfindung gehörig wird auch die Verwendung einer Steuereinrichtung zum Steuern der Anzeigeeinrichtung eines informationstechnischen Geräts nach Maßgabe eines erfindungsgemäßen Verfahrens angesehen.

Die Vorteile, Merkmale und Besonderheiten der unterschiedlichen Varianten des erfindungsgemäßen Verfahrens gelten in analoger Weise auch für das Computerprogrammprodukt, den Datenträger, das informationstechnische Gerät sowie die Verwendung der Steuereinrichtung gemäß der vorliegenden Erfindung, ohne dass dies erneut beschrieben werden müsste.

Die vorliegende Erfindung ist auch sehr gut bei einer Anzeigeeinrichtung einsetzbar, die mittels einer optischen Erfassung von Steuerbewegungen gesteuert werden kann. Eine derartige optische Erfassung kann beispielsweise mittels einer oder mehrerer Kameras erfolgen, die Steuer- oder Wischbewegungen erfasst und an die Steuereinrichtung weiterleitet. Derartige Kameras können auch z. B. Kopf- oder Augenbewegungen erfassen, die ebenfalls zur Steuerung der Anzeigeeinrichtung eingesetzt werden können.

Im Folgenden wird die Erfindung anhand vorteilhafter Ausführungsformen unter Bezugnahme auf die Zeichnung näher erläutert. Es zeigen schematisch:
- Fig. 1: eine Draufsicht auf eine Anzeigeeinrichtung, beispielsweise eines Smartphones, in einer ersten Anzeigesituation,
- Fig. 2: eine der Fig. 1 ähnliche Darstellung der Anzeigeeinrichtung in einer zweiten Anzeigesituation,
- Fig. 3: eine der Fig. 1 ähnliche Darstellung der Anzeigeeinrichtung in einer dritten Anzeigesituation,
- Fig. 4: eine der Fig. 1 ähnliche Darstellung der Anzeigeeinrichtung in einer vierten Anzeigesituation,
- Fig. 5: eine der Fig. 1 ähnliche Darstellung der Anzeigeeinrichtung in einer fünften Anzeigesituation, und
- Fig. 6: eine der Fig. 1 ähnliche Darstellung der Anzeigeeinrichtung in einer sechsten Anzeigesituation.

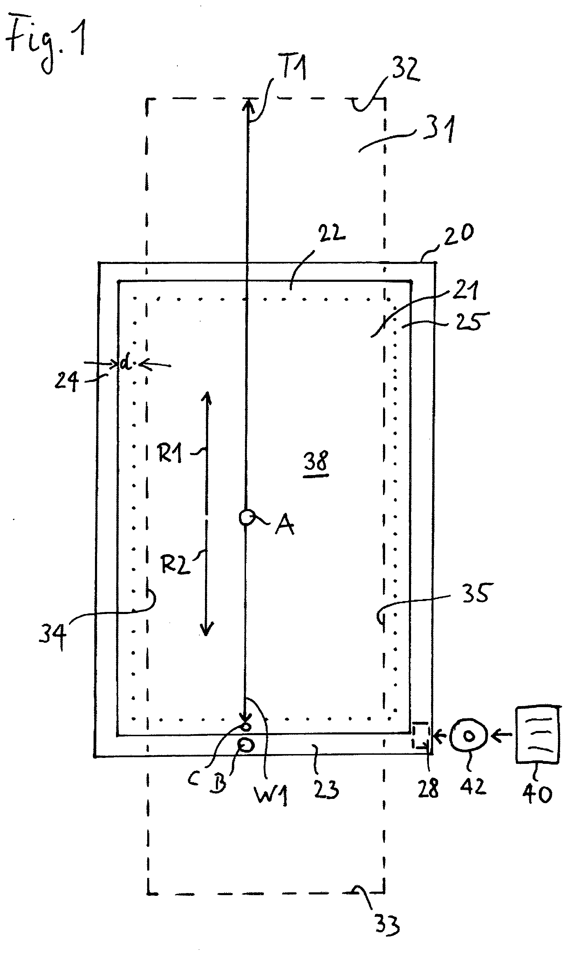

In Fig. 1 ist ein informationstechnisches Gerät 20 gezeigt. Bei der nachfolgenden Beschreibung vorteilhafter Ausführungsformen der Erfindung wird davon ausgegangen, dass es sich bei dem informationstechnischen Gerät 20 um ein Smartphone mit einem als Anzeigeeinrichtung 21 dienenden Touchscreen handelt, der mittels der Finger (und ggf. des Daumens) eines Benutzers beeinflusst werden kann. Selbstverständlich können statt der Finger auch speziell ausgebildete Stifte oder andere Gegenstände verwendet werden. Alternativ ist es auch möglich, dass es sich bei der Anzeigeeinrichtung 21 um einen "normalen" Monitor - beispielsweise eines Notebooks oder Desktop-Computers - handelt, dessen Darstellung durch einen Mauszeiger mit gedrückter linker oder rechter Maustaste beeinflusst werden kann.

Richtungsangaben wie "links", "rechts", "oben" und "unten" beziehen sich nachfolgend jeweils auf die räumliche Orientierung bezüglich der Darstellung in den Figuren in der Zeichnungsebene, ohne dass dies eine Beschränkung darstellen soll. Sofern Bilder in Hochformat dargestellt sind, bedeutet dies, dass sich ihre Längsseite in Richtung von oben nach unten erstreckt, während sich die Längsseite von in Querformat dargestellten Bildern von links nach rechts erstreckt. Bei den vorgenannten Erstreckungsrichtungen besteht zwischen "von links nach rechts" und "von rechts nach links" sowie "von oben nach unten" und "von unten nach oben" etc. natürlich kein Unterschied. Außerdem wird davon ausgegangen, dass sich der Ausdruck "Bildhöhe" auf die Richtung von oben nach unten bezieht, während sich "Bildbreite" auf die Richtung von links nach rechts bezieht.

In Fig. 1 ist schließlich am rechten unteren Eck schematisch eine Steuereinrichtung 28 angedeutet, die üblicherweise als Prozessor bzw. als Chip ausgestaltet ist und zum Steuern der Anzeigeeinrichtung 21, vorzugsweise des gesamten informationstechnischen Geräts 20, ausgestaltet ist. Zum Steuern der Steuereinrichtung 28 dient ein Computerprogramm bzw. Computerprogrammprodukt 40, welches auf einem beispielhaft als CD-ROM 42 dargestellten Datenträger gespeichert werden kann und über eine geeignete Schnittstelle oder ein entsprechendes Lesegerät in die Steuereinrichtung 28 eingelesen werden und dort ablaufen kann.

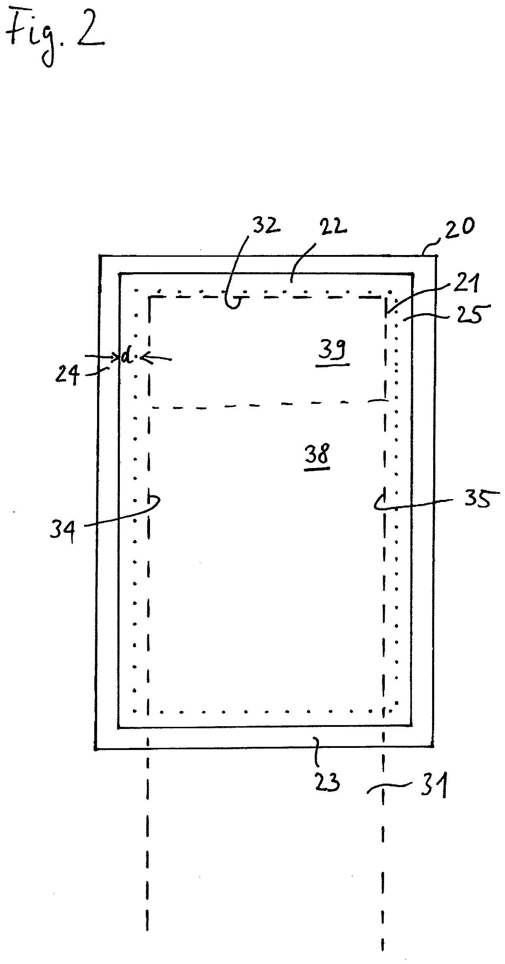

Auf der Anzeigeeinrichtung 21 ist gemäß Darstellung in Fig. 1 strichliert ein Informationselement dargestellt, das in seiner Gesamtheit mit 31 bezeichnet ist. Der auf der Anzeigeeinrichtung 21 tatsächlich dargestellte Abschnitt des Informationselements 31 ist mit der Bezugszahl 38 bezeichnet. Dies bedeutet in anderen Worten, dass der obere Rand 32 und der untere Rand 33 des Informationselements 31 nicht auf der Anzeigeeinrichtung 21 dargestellt sind, während der linke Rand 34 und der rechte Rand 35 des Informationselements 31 auf der Anzeigeeinrichtung 21 dargestellt sind. Um weiter oben befindliche Teile des Informationselements 31 zur Darstellung zu bringen, kann ein Benutzer an einem mit A bezeichneten Anfangspunkt einer Wischgeste den Touchscreen 21 berühren, beispielsweise mit einem Finger, und den Finger in einer Richtung R2 nach unten bewegen. Üblicherweise sind Touchscreens so ausgelegt, dass sich dabei der gerade angezeigte Abschnitt des Informationselements 31 zusammen mit dem Finger in Richtung R2 nach unten bewegt und sich somit effektiv der dargestellte Abschnitt 38 des Informationselements 31 in Richtung R1 entsprechend nach oben verschiebt. Sofern der Benutzer seine mit W1 bezeichnete Steuerbewegung (Wischgeste) so weit in Richtung R2 nach unten fortsetzt, bis er den unteren Rand 23 der Anzeigeeinrichtung 21 erreicht oder überschritten hat, ist das erfindungsgemäße Verfahren so ausgelegt, dass die Steuereinrichtung 28 einen Sprung ausführt, so dass der dargestellte Abschnitt 38 des Informationselements 31 auch den oberen Rand 32 des Informationselements 31 umfasst, was als erster Randabschnitt 39 bezeichnet werden kann, wie er in Fig. 1 dargestellt ist. Diese Situation ist in Fig. 2 dargestellt, wobei sich der obere Rand 32 des Informationselements 31 nahe beim oberen Rand 22 der Anzeigeeinrichtung 21 befindet.

Gemäß einer Variante der vorliegenden Erfindung wird der vorstehend beschriebene Sprung an den oberen Rand 32 des Informationselements 31 dann ausgeführt, wenn der Endpunkt B der Steuerbewegung W1 den unteren Rand 23 der Anzeigeeinrichtung 21 erreicht bzw. - wie es in Fig. 1 explizit dargestellt ist - überschritten hat, so dass er sich auf dem nicht mehr zur Anzeigeeinrichtung 21 gehörigen Teil des informationstechnischen Geräts 20 befindet. Alternativ kann das erfindungsgemäße Verfahren auch so ausgelegt sein, dass es ausreicht, wenn sich der letzte Berührpunkt C der Anzeigeeinrichtung 21 innerhalb eines bestimmten Streifens mit einer Breite d vom jeweiligen Rand - in diesem Beispiel vom unteren Rand 23 - der Anzeigeeinrichtung 21 befindet. Die Breite d dieses Rands beträgt beispielsweise 3-5 mm. Wie aus Fig. 1 ersichtlich ist, wird durch die sprunghafte Bewegung an das obere Ende 32 des Informationselements 31 eine Translation T1 hinsichtlich des dargestellten Abschnitts 38 des Informationselements 31 ausgeführt, die wesentlich größer bzw. länger ist als die Länge der Wisch- bzw. Steuerbewegung W1.

Die Anzeigeeinrichtung 21 weist einen oberen Rand 22, einen unteren Rand 23, einen linken Rand 24 sowie einen rechten Rand 25 auf, die jeweils eine Breite bzw. Ausdehnung von d aufweisen, wie es beim linken Rand 24 dargestellt ist. Da die vorgenannten Ränder 22-25 von einem Betrachter nicht als solche zu erkennen sind, sind diese Ränder nur gepunktet dargestellt.

Technisch gesehen wird bei dem erfindungsgemäßen Verfahren so vorgegangen, dass zumindest ein erstes Steuersignal erzeugt und an die Steuereinrichtung 21 geleitet wird, sobald eine Steuerbewegung erfolgt, die eine Translation auslöst. Außerdem wird ein zweites Steuersignal erzeugt, sobald die Steuerbewegung denjenigen Rand (hier den zweiten, unteren Rand 23) der Anzeigeeinrichtung 21 erreicht hat, der sich durch die Bewegung in der zweiten Richtung R2 ergibt, sei es nun durch eine Steuerbewegung über den betreffenden Rand der Anzeigeeinrichtung 21 hinaus oder durch ein Erreichen des entsprechenden Rands (mit der Breite d) der Anzeigeeinrichtung. Selbstverständlich können beliebig weitere Steuersignale erzeugt und von der Steuereinrichtung ausgewertet werden, ohne dass die grundsätzliche Funktionsweise des erfindungsgemäßen Verfahrens hierdurch beeinträchtigt wäre.

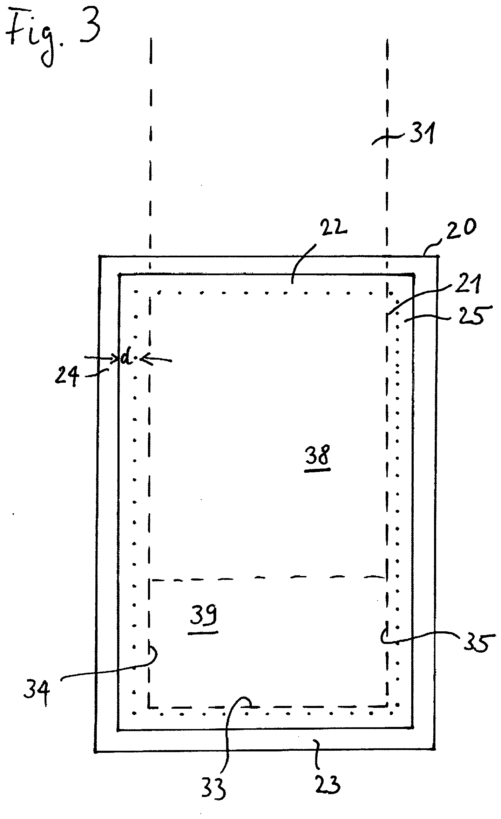

Es versteht sich von selbst, dass bei einer Ausführung der in Verbindung mit Fig. 1 und 2 erläuterten Schritte in jeweils umgekehrter Richtung ein Sprung des dargestellten Abschnitts 38 des Informationselements 31 an dessen zweiten, unteren Rand 33 erzielt werden kann. Somit wird die Wischgeste - beispielsweise ausgehend vom Punkt A nach oben ausgeführt und bis zum Erreichen des oberen (ersten) Rands 22 der Anzeigeeinrichtung 21 fortgesetzt, so dass sich eine Translation des dargestellten Abschnitts 38 nach unten ergibt. Die hierdurch erzielte Anzeigesituation ist in Fig. 3 dargestellt.

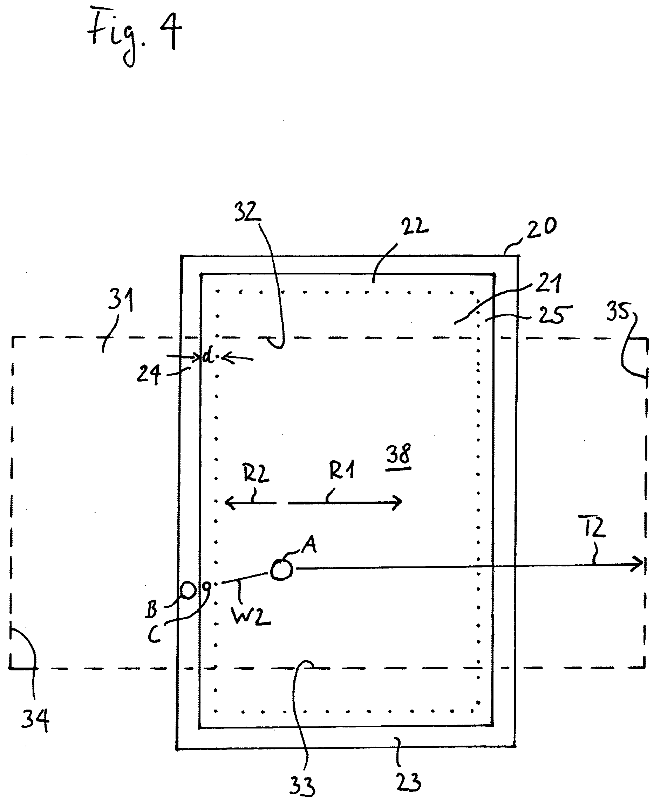

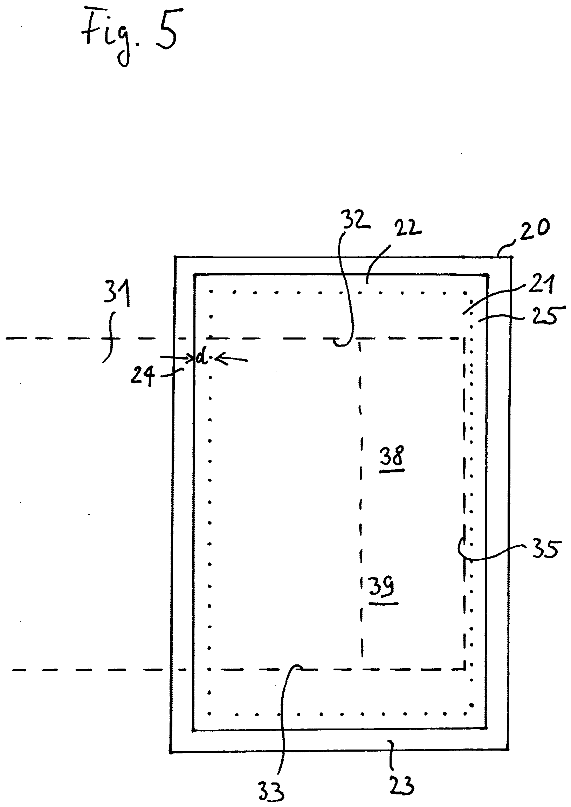

Das erfindungsgemäße Verfahren lässt sich in analoger Weise gemäß Fig. 4 auch für das Erreichen eines linken Endes 34 oder eines rechten Endes 35 eines Informationselements 31 - das beispielsweise eine Bildergalerie mit verschiedensten Bildern sein kann - anwenden. Anders als bei der in Fig. 1 dargestellten Situation ist bei der in Fig. 4 dargestellten Anzeigesituation sowohl der obere Rand 32 als auch der untere Rand 33 des Informationselements 31 auf der Anzeigeeinrichtung 21 dargestellt, nicht jedoch dessen linker Rand 34 und dessen rechter Rand 35. Durch Antippen des Punkts A mit einem Finger und Ziehen dieses Fingers bis zum linken Rand 24 der Anzeigeeinrichtung 21 - entweder bis zum Punkt B außerhalb der Anzeigeeinrichtung 21 oder bis zum letzten Berührpunkt C innerhalb des linken Rands 24 der Breite d - wird ein Sprung an den rechten Rand 35 des Informationselements 31 ausgeführt, so dass sich der rechte Rand 35 des Informationselements 31 nahe des rechten Rands 25 der Anzeigeeinrichtung 21 befindet. Wie auch bei dem unter Bezug auf die Fig. 1-3 beschriebenen vertikalen Scrollen wird bei diesem horizontalen Scrollen in analoger Weise ein erstes Steuersignal und ein zweites Steuersignal erzeugt und der Steuereinrichtung 28 zugeführt, damit diese den Sprung des dargestellten Abschnitts 38 des Informationselements 31 ausführen kann. Die Anzeigesituation nach Ausführen des Sprungs ist in Fig. 5 dargestellt. Der Steuerbewegung W2 entspricht damit die Translation T2.

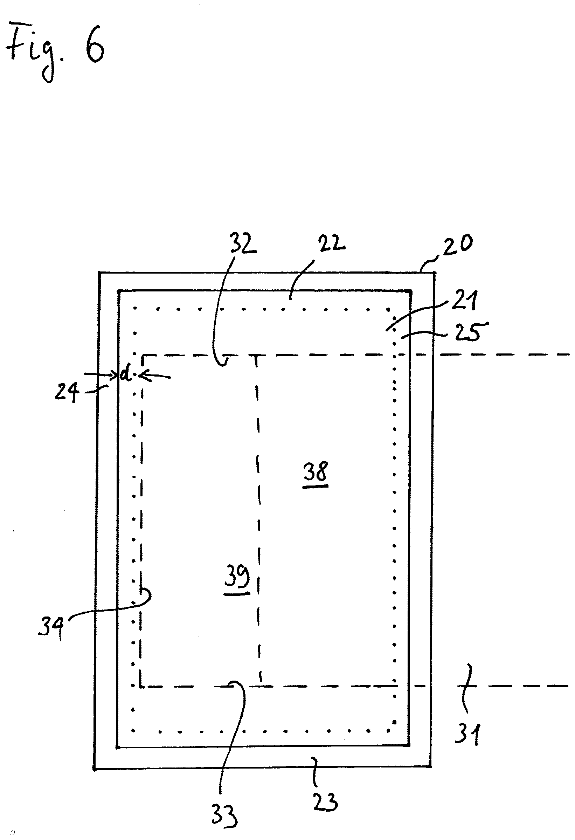

Sofern die unter Bezug auf die Fig. 3 und 4 ausgeführte Steuerbewegung W2 in der umgekehrten Richtung ausgeführt wird, wird auch eine Translation T2 in der umgekehrten Richtung ausgeführt, und es wird der linke Rand 34 des Informationselements 31 erreicht, so dass sich der dargestellte Abschnitt 38 des Informationselements 31 nahe beim linken Rand 24 der Anzeigeeinrichtung 21 befindet. Diese Anzeigesituation ist in Fig. 6 dargestellt.

Bei den vorstehend beschriebenen Steuerbewegungen W1 und W2 wurde davon ausgegangen, dass sie sich in halbwegs exakter vertikaler oder horizontaler Richtung - also längs der Seitenkanten der Anzeigeeinrichtung 21 - bewegen. In analoger Weise wurde davon ausgegangen, dass sich die entsprechenden Translationen T1 und T2 genau entgegengesetzt bzw. antiparallel zu diesen Steuerbewegungen W1 bzw. W2 verhalten. Es kann davon ausgegangen werden, dass die Steuereinrichtung 28 jeweils nur die horizontale oder vertikale Komponente einer Steuerbewegung erfasst, je nachdem in welcher Richtung überhaupt eine Translation möglich ist. Diese Ausgestaltung des erfindungsgemäßen Verfahrens ist insbesondere dann von Vorteil, wenn sich das Informationselement 31 entweder nur nach oben und unten (Beispiel: Liste oder Textdokument) oder aber nur nach links und rechts (Beispiel: Bildergalerie oder einzelne Monate eines Kalendariums) scrollen lässt.

Sofern das Informationselement 31 jedoch so beschaffen ist, dass ein Scrollen in alle vier "Himmelsrichtungen" oder sogar in jede beliebige Richtung möglich ist, wie es beispielsweise bei einem gezoomten Bild der Fall ist, kann das erfindungsgemäße Verfahren so ausgelegt sein, dass der Sprung an denjenigen Punkt am Rand des Informationselements erfolgt, der einer Verlängerung der Steuerbewegung in der "schrägen" Richtung bei Auftreffen auf den entsprechenden Rand der Anzeigeeinrichtung entspricht.

Es ist festzuhalten, dass die unter Bezug auf die dargestellten Ausführungsformen beschriebenen Merkmale der Erfindung, wie beispielsweise die Form, Ausgestaltung und Anordnung einzelner Elemente des informationstechnisches Geräts oder der Durchführung einzelner Details des erfindungsgemäßen Verfahrens, auch bei anderen Ausführungsformen vorhanden sein können, außer wenn es anders angegeben ist oder sich aus technischen Gründen von selbst verbietet.

### Bezugszeichenliste

20 = Informationstechnisches Gerät
21 = Anzeigeeinrichtung/Touchscreen
22 = erster/oberer Rand der Anzeigeeinrichtung 21
23 = zweiter/unterer Rand der Anzeigeeinrichtung 21
24 = linker Rand der Anzeigeeinrichtung 21
25 = rechter Rand der Anzeigeeinrichtung 21
28 = Steuereinrichtung/Chip
31 = Informationselement
32 = erster/oberer Rand des Informationselements 31
33 = zweiter/unterer Rand des Informationselements 31
34 = linker Rand des Informationselements 31
35 = rechter Rand des Informationselements 31
38 = dargestellter Abschnitt
39 = erster Randabschnitt
40 = Computerprogramm
42 = Datenträger
d = Breite des Rands
A = Anfangspunkt der Steuerbewegung
B = Endpunkt der Steuerbewegung
C = letzter Berührpunkt auf der Anzeigeeinrichtung 21
R1, R2 = erste/zweite Richtung
T1, T2 = Translation
W1, W2 = Steuerbewegung/Wischgeste

## Patentansprüche

1. Verfahren zum Steuern einer Anzeigeeinrichtung (21) derart, dass ausgehend von einem auf der Anzeigeeinrichtung (21) dargestellten Abschnitt (38) eines Informationselements (31), auf der ein erster Rand (32, 33; 34, 35) des Informationselements (31) nicht dargestellt ist, ein erster Randabschnitt (39) des Informationselements (31) dargestellt werden soll, der den ersten Rand (32, 33; 34, 35) des Informationselements (31) sowie den dem ersten Rand (32, 33; 34, 35) benachbarten Bereich des Informationselements (31) umfasst,
aufweisend den Schritt des Ausführens einer Translation (T1, T2) des dargestellten Abschnitts (38) des Informationselements (31) in eine erste Richtung (R1) nach Maßgabe einer von einem Benutzer ausgeführten, ein erstes Steuersignal für die Translation (T1, T2) auslösenden Steuerbewegung (W1, W2) in eine zweite Richtung (R2), wobei das erste Steuersignal einer Steuereinrichtung (28) zugeführt wird,
und weiterhin die Schritte aufweist,
dass ein zweites Steuersignal erzeugt und der Steuereinrichtung (28) zugeführt wird, sobald die Steuerbewegung (W1, W2) den durch Bewegung in der zweiten Richtung (R2) erreichten Rand (23, 22; 25, 24) der Anzeigeeinrichtung (21) erreicht hat,
dass die Steuereinrichtung (28) nach Empfang des ersten und des zweiten Steuersignals sprunghaft den durch Bewegung in der ersten Richtung (R1) erreichten ersten Randabschnitt (39) des Informationselements (31) auf der Anzeigeeinrichtung (21) darstellt, und dass die Geschwindigkeit der Steuerbewegung (W1, W2) in unmittelbarer Nähe vor dem Rand (22-25) der Anzeigeeinrichtung (21) gemessen wird und der Rand (22-25) der Anzeigeeinrichtung (21) als erreicht angesehen wird, wenn die Geschwindigkeit einen vorbestimmten Wert überschreitet.

2. Verfahren nach Anspruch 1,
**dadurch gekennzeichnet, dass** der Rand (22-25) der Anzeigeeinrichtung (21) ein Streifen mit einer vorbestimmten Breite (d) ist.

3. Verfahren nach Anspruch 1 oder 2,
**dadurch gekennzeichnet, dass** die Translation (T1, T2) proportional zur Steuerbewegung (W1, W2) verläuft, bis die Steuerbewegung (W1, W2) den zweiten Rand (23, 22; 25, 24) der Anzeigeeinrichtung (21) erreicht.

4. Verfahren nach einem der vorhergehenden Ansprüche,
**dadurch gekennzeichnet, dass** die Steuereinrichtung (28) den ersten Randabschnitt (39) so darstellt, dass der erste Rand (32, 33; 34, 35) des Informationselements (31) dem ersten Rand (22, 23; 24, 25) der Anzeigeeinrichtung (21) benachbart ist.

5. Verfahren nach einem der vorhergehenden Ansprüche,
**dadurch gekennzeichnet, dass** die erste Richtung (R1) zumindest im Wesentlichen antiparallel zur zweiten Richtung (R2) ist.

6. Verfahren nach einem der vorhergehenden Ansprüche,
**dadurch gekennzeichnet, dass** als Anzeigeeinrichtung (21) ein Touchscreen verwendet und als Steuerbewegung (W1, W2) eine Wischbewegung mittels eines Fingers und/oder eines Daumens und/oder eines Zeigegeräts ausgeführt wird.

7. Computerprogrammprodukt (40) für eine Steuereinrichtung (28) eines informationstechnischen Geräts (20) zum Durchführen eines Verfahrens gemäß einem der vorhergehenden Ansprüche.

8. Datenträger (42) mit einem auf dem Datenträger (42) gespeicherten Computerprogrammprodukt (40) gemäß Anspruch 7.

9. Informationstechnisches Gerät (20), aufweisend
- eine Anzeigeeinrichtung (21), und
- eine Steuereinrichtung (28) zum Steuern der Anzeigeeinrichtung (21), wobei die Steuereinrichtung (28) so ausgestaltet ist, dass sie die Anzeigeeinrichtung (21) nach Maßgabe eines Verfahrens gemäß einem der Ansprüche 1 bis 6 steuern kann.

10. Informationstechnisches Gerät (20) nach Anspruch 10,
**dadurch gekennzeichnet, dass** die Anzeigeeinrichtung (21) einen Touchscreen aufweist.

11. Informationstechnisches Gerät (20) nach Anspruch 10 oder 11,
**dadurch gekennzeichnet, dass** die Anzeigeeinrichtung (21) einen Rand (22-25) umfasst, der als Streifen mit einer vorbestimmten Breite (d) definiert ist.

12. Verwendung einer Steuereinrichtung (28) zum Steuern der Anzeigeeinrichtung (21) eines informationstechnischen Geräts (20) nach Maßgabe eines Verfahrens gemäß einem der Ansprüche 1 bis 6.

## Claims

1. Method for controlling a display device (21) in such a way that starting with section (38) of an information element (31) depicted on the display device (21), upon which a first edge (32, 33; 34, 35) of the information element (31) is not depicted, a first edge section (39) of the information element (31) is to be depicted, that comprises the first edge (32, 33; 34, 35) of the information element (31) as well as an area neighboring the first edge (32, 33; 34, 35) of the information element (31),
exhibiting the step of execution of a translation motion (T1, T2) of the depicted section (38) of the information element (31) in a first direction (R1), according to a control motion (W1, W2) in a second direction (R2), carried out by the user, triggering a first control signal for the translation motion (T1, T2), whereby the first control signal is supplied to a control device (28),
and furthermore exhibits the steps,
that produce a second control signal and which is supplied to the control device (28), as soon as the control motion (W1, W2) has reached, through the motion in the second direction (R2), the edge (23, 22; 25, 24) of the display device (21),
that the control device (28), after having received the first and second control signals, rapidly depicts the first edge section (39) of the information element (31) on the display device (21) reached through movement in the first direction (R1), and
that the speed of the control motion (W1, W2) is measured in the immediate vicinity of the edge (22-25) of the display device (21) and that the edge (22-25) of the display device (21) is deemed to have been reached when the speed exceeds a predetermined value.

2. Method according to Claim 1
**characterized by** the fact that the edge (22-25) of the display device (21) is a strip of a predetermined width (d).

3. Method according to Clam 1 or 2,
**characterized by** the fact that the translation motion (T1, T2) proceeds proportionally to the control motion (W1, W2), up until the control motion (W1, W2) has reached the second edge (23, 22; 25, 24) of the display device (21).

4. Method according to one of the preceding Claims,
**characterized by** the fact that the control device (28) depicts the first edge section (39) in such a manner that the first edge (32, 33; 34, 35) of the information element (31) neighbors the first edge (22, 23; 24, 25) of the display device (21).

5. Method according to one of the preceding Claims,
**characterized by** the fact that the first direction (R1) is at least essentially antiparallel to the second direction (R2).

6. Method according to one of the preceding Claims,
**characterized by** the fact that a touchscreen is used as the display device (21) and that the control motion (W1, W2) is executed by a swipe motion using a finger and/or thumb and/or pointing device.

7. Computer program product (40) for a control device (28) of an information technology device (20) for the execution of a method according to one of the preceding Claims.

8. Data carrier (42) with the computer program product (40) according to Claim 7 stored on the data carrier (42).

9. Information technology device (20) exhibiting
- a display device (21), and
- a control deice (28) for the control of the display device (21), wherein the control device (28) is designed in such a way that it can control the display device (21) pursuant to a method according to one of the Claims 1 through 6.

10. Information technology device (20) according to Claim 10, **characterized by** the fact that the display device (21) exhibits a touchscreen.

11. Information technology device (20) according to Claim 10 or 11, **characterized by** the fact that the display device (21) comprises an edge (22-25), that is defined as a strip with a predetermined width (d).

12. Use of a control device (28) for the control of the display device (21) of an information technology device (20) pursuant to a method according to one of the Claims 1 through 6.

## Revendications

1. Procédé pour commander un dispositif d'affichage (21) de telle sorte que partant d'une section (38) d'un élément d'information (31) représentée sur le dispositif d'affichage (21), sur lequel un première bord (32, 33 ; 34, 35) de l'élément d'information (31) n'est pas représenté, une première section de bord (39) de l'élément d'information (31) doit être représentée, qui comprend le premier bord (32, 33 ; 34, 35) de l'élément d'information (31) ainsi que la zone de l'élément d'information (31) adjacente au premier bord (32, 33 ; 34, 35), présentant l'étape de la réalisation d'une translation (T1, T2) de la section représentée (38) de l'élément d'information (31) dans une première direction (R1) conformément à un mouvement de commande (W1, W2) réalisé par un utilisateur, déclenchant un premier signal de commande pour la translation (T1, T2) dans une deuxième direction (R2), dans lequel le premier signal de commande est amené à un dispositif de commande (28),
et présente en outre les étapes
qu'un deuxième signal de commande est généré et amené au dispositif de commande (28), dès que le mouvement de commande (W1, W2) a atteint le bord (23, 22 ; 25, 24) du dispositif d'affichage (21) atteint par mouvement dans la deuxième direction (R2),
que le dispositif de commande (28) représente après réception du premier et du deuxième signal de commande brusquement la première section de bord (39) de l'élément d'information (31) atteinte par mouvement dans la première direction (R1) sur le dispositif d'affichage (21), et
que la vitesse du mouvement de commande (W1, W2) est mesurée à proximité immédiate devant le bord (22-25) du dispositif d'affichage (21) et le bord (22-25) du dispositif d'affichage (21) est considéré comme atteint, lorsque la vitesse dépasse une valeur prédéterminée.

2. Procédé selon la revendication 1,
**caractérisé en ce que** le bord (22-25) du dispositif d'affichage (21) est une bande d'une largeur prédéterminée (d).

3. Procédé selon la revendication 1 ou 2,
**caractérisé en ce que** la translation (T1, T2) s'étend proportionnellement au mouvement de commande (W1, W2), jusqu'à ce que le mouvement de commande (W1, W2) atteigne le deuxième bord (23, 22 ; 25, 24) du dispositif d'affichage (21).

4. Procédé selon l'une quelconque des revendications précédentes,
**caractérisé en ce que** le dispositif de commande (28) représente la première section de bord (39) de sorte que le premier bord (32, 33 ; 34, 35) de l'élément d'information (31) est adjacent au premier bord (22, 23 ; 24, 25) du dispositif d'affichage (21).

5. Procédé selon l'une quelconque des revendications précédentes,
**caractérisé en ce que** la première direction (R1) est au moins sensiblement antiparallèle à la deuxième direction (R2).

6. Procédé selon l'une quelconque des revendications précédentes,
**caractérisé en ce qu'**un écran tactile est utilisé en tant que dispositif d'affichage (21) et un mouvement de balayage est réalisé en tant que mouvement de commande (W1, W2) au moyen d'un doigt et/ou d'un pouce et/ou d'un appareil de pointage.

7. Produit de programme informatique (40) pour un dispositif de commande (28) d'un appareil d'information (20) pour la réalisation d'un procédé selon l'une quelconque des revendications précédentes.

8. Support de données (42) avec un produit de programme informatique (40) enregistré sur le support de données (42) selon la revendication 7.

9. Appareil d'information (20), présentant
- un dispositif d'affichage (21), et
- un dispositif de commande (28) pour la commande du dispositif d'affichage (21), dans lequel le dispositif de commande (28) est configuré de sorte qu'il peut commander le dispositif d'affichage (21) conformément à un procédé selon l'une quelconque des revendications 1 à 6.

10. Appareil d'information (20) selon la revendication 10, **caractérisé en ce que** le dispositif d'affichage (21) présente un écran tactile.

11. Appareil d'information (20) selon la revendication 10 ou 11, **caractérisé en ce que** le dispositif d'affichage (21) comprend un bord (22-25), qui est défini en tant que bande d'une largeur prédéterminée (d).

12. Utilisation d'un dispositif de commande (28) pour la commande du dispositif d'affichage (21) d'un appareil d'information (20) conformément à un procédé selon l'une quelconque des revendications 1 à 6.
